Europäisches Patentamt

European Patent Office

Office européen des brevets

(11) Publication number: **0 363 197**
**A2**

# EUROPEAN PATENT APPLICATION

(21) Application number: 89310193.1

(51) Int. Cl.⁵: **C01B 33/32**

(22) Date of filing: 05.10.89

(30) Priority: 06.10.88 NL 8802446

(43) Date of publication of application:
11.04.90 Bulletin 90/15

(84) Designated Contracting States:
BE GB IT NL

(71) Applicant: **UNILEVER PLC**
**Unilever House Blackfriars P.O. Box 68**
**London EC4P 4BQ(GB)**
(84) **GB**

Applicant: **UNILEVER NV**
**Burgemeester s'Jacobplein 1 P.O. Box 760**
**NL-3000 DK Rotterdam(NL)**
(84) **BE IT NL**

(72) Inventor: **Theunissen, Joseph Pierre Huhert**
**Verdistraat 2**
**NL-6245 CM Eijsden(NL)**

(74) Representative: **Roscoe, Brian Corrie et al**
**UNILEVER PLC Patents Division P.O. Box 68**
**Unilever House**
**London EC4P 4BQ(GB)**

(54) **Preparation of sodium silicate.**

(57) The hydrothermal method of preparing sodium silicate (waterglass) is capable of providing high, ie above 2.6, molar $SiO_2/Na_2O$ ratio by using cristobalite or tridymite as the silica source.

EP 0 363 197 A2

## PREPARATION OF SODIUM SILICATE

Field of the invention:

The invention relates to a method of preparing waterglass (aqueous sodium silicate) by heating $SiO_2$, caustic soda solution and water under increased pressure above 150 °C. The invention furthermore relates to hydrothermally prepared waterglass with a molecular ratio of $SiO_2/Na_2O$ of more than 2.6.

Background to the invention:

At the present time waterglass can be prepared in two ways, namely by the furnace process and the hydrothermal process. Both methods of working are amply described in the literature.

Thus in German patent 3012073 a method is given for the preparation of waterglass by fusing silicon dioxide in a furnace with, for example, alkali-metal hydroxides at a temperature between 1000 and 1600 °C. By this method one obtains waterglass with a relatively high molar ratio of about 3.5 $SiO_2/Na_2O$. The molar ratio $SiO_2/Na_2O$ is important for the field of application of the waterglass. If the ratio is high, as in the case of waterglass prepared by the furnace process, it can be used for the preparation of catalysts in which it is desired that the silicon dioxide is used as a carrier. In the cast iron industry also, where waterglass is used as a binding agent, a high molecular ratio of $SiO_2$ to $Na_2O$ is wanted. Waterglass used as a binding agent in the paper and carboard industry also has a $SiO_2/Na_2O$ molar ratio of about 3.3.

For other applications of waterglass such as in washing products a lower molar ratio $SiO_2/Na_2O$ is desired, varying between 2.0 and 2.5. Types of waterglass with a relatively low molar ratio are prepared by the hydrothermal process. This is carried out at a temperature of 150 - 250 °C in an autoclave at increased pressure. Higher temperatures may well be used, but because the reaction takes place in water the use of an autoclave is essential. The use of higher temperatures also makes higher pressures necessary and thus the autoclaves are relatively expensive.

The hydrothermal process is described in the French patent 1112807. The substances used as the starting point of this process, NaOH and $SiO_2$, are used in a ratio of 1:0.5 - 1:2: finely divided $SiO_2$ with a grain size of 0.1 - 1000 micron are brought into reaction with each other at a temperature of 175 to 320 °C and a pressure varying from 9 to 115 atm. The high temperatures specified in this patent description make it necessary to apply high pressures, which increases costs very considerably. For this reason, in processes described later, operation takes place preferably at a temperature below 320 °C so that cheaper autoclaves can be utilized. The product obtained by the process described in the French patent has a molar ratio $SiO_2/Na_2O$ which varies from 0.8 to 1.25 (examples 6 and 7).

In the Netherlands patent application 7802697 the preparation of waterglass is carried out by bringing $SiO_2$ and NaOH into reaction with each other at above 200 °C at raised pressure in a reactor which is known in itself but has been used for other purposes hitherto. The resultant molar ratio of $SiO_2$ to $Na_2O$ was about 2.0.

According to the German patent application 3421158 the hydrothermal preparation of a sodium silicate solution is carried out at a temperature of 200 - 230 °C under raised pressure in a rotating cylindrical pressure reactor. The ratio by weight of $SiO_2$ to $Na_2O$ was 1.9 to 2.1:1, achieved by bringing an excess of sand in respect of the quantity of silicate in the waterglass, into reaction with a preheated solution of NaOH. Efforts are made towards a shortening of the reaction time and a lower consumption of energy.

The European patent 0033109 describes hydrothermal preparation of sodium silicate solution in a static reactor where, by means of a pump, the liquid is made to circulate at a temperature of 150 - 250 °C and under saturated steam pressure through a fluidized bed of sand. The aim is to achieve a method of working which takes place in a relatively small space, in a relatively short period of time and at low temperatures so that energy consumption is minimized. Although the introduction to the description states that by using the hydrothermal method sodium silicate solutions can be prepared with a weight ratio $SiO_2:Na_2O$ up to 2:8:1, the examples quoted for this European patent give ratios of only 1.52 and 1.53 and the examples quoted for comparison purposes give values varying from 1.49 to 2.03. From the other literature references and from British patent application 2119779, submitted after the European application 0033109, it is not known that waterglass can be prepared by the hydrothermal process with a ratio by weight as high as the 2.8 suggested in the European patent 0033109. The British patent application 2119779 describes a method of preparing waterglass by the hydrothermal process in which an aqueous solution of alkali metal hydroxides is passed through a bed of $SiO_2$ with an average particle size of 0.1 - 2 mm in a vertical tube reactor without mechanical agitation. The temperature applied in this case is 150 - 240 °C. According to the examples a ratio by weight of $SiO_2$ to $Na_2O$ in the end product of from 1 to 2.5 was obtained.

It is clear from the above-quoted literature that if one wishes to prepare waterglass with a high molar ratio of $SiO_2$ to $Na_2O$, that is a ratio over 2.5, one must use the furnace process. In this the attack on the sand is so fierce that silicates with high molar ratios can be obtained. A disadvantage of the furnace method is that it is relatively expensive because of the high temperature. The process conditions are so aggressive that any impurities in the sand such as iron, titanium and aluminium are dissolved in the waterglass so obtained and it is less pure than waterglass produced by the hydrothermal method. In addition the furnace method produces a solid material which has to be dissolved in water, whereas the direct product of the hydrothermal process is an aqueous solution.

General description of the invention:

If a producer of waterglass, then, is to be able to supply this product with the different molar ratios then he must have the means of running both processes, that is the furnace process for preparing waterglass with a high molar ratio $SiO_2/Na_2O$ and the hydrothermal process to prepare waterglass with a relatively low $SiO_2/Na_2O$ molecular ratio. The latter process is cheaper than the furnace method and leads to a purer product.

It is now considered possible to prepare waterglass with a considerably higher molar ratio $SiO_2/Na_2O$ than was possible until now with the more desirable process, inasmuch as in accordance with the invention the hydrothermal process is the one used. This means that it is no longer necessary to use the furnace process for preparing waterglass with a molar ratio $SiO_2/Na_2O$ higher than 2.5 and the method of working in accordance with the invention is characterised in that cristobalite or tridymite is used as the basic substance for the $SiO_2$ ingredient in the hydrothermal process. With a working pressure of 12 bar and a temperature of about 190 °C a waterglass product can be obtained with a molar ratio of 3.1 $SiO_2/Na_2O$. With higher pressures even higher molar ratios can be achieved. This method of working represents a fundamental breakthrough for the hydrothermal preparation of waterglass because it is now possible to obtain $SiO_2/Na_2O$ molar ratios considerably higher than those achieved up to now and therefore it is no longer necessary to use the furnace process with all its associated disadvantages in order to prepare waterglass with a high $SiO_2/Na_2O$ ratio.

With regard to cristobalite it can be further stated that this is a product obtained in the process of refining sand by heating it to 1000-1500 °C with a small amount of catalyst; by this means the original quartz is wholly or partially converted into cristobalite. Cristobalite as such can be obtained where it occurs in nature.

In accordance with the invention it is also possible to carry out the reaction in two stages: first waterglass is prepared from ordinary sand or quartz so that, using the hydrothermal process, a molar ratio of about 2.0 is obtained; then cristobalite or tridymite is added and the reaction continued until the desired higher molar ratio of about 3.0 is obtained. With this method it is possible to benefit from the advantages reported in the above-cited literature references with regard to the hydrothermal process whenever one uses the specific cristobalite form in place of the silicon dioxide used in the cited cases.

Specific description of the invention

The invention will now be described in more detail with reference to the following examples.

Example I

To prepare waterglass 1406 g of cristobalite, 1002 g of 50% by weight NaOH solution in water, and 2480 g of water were taken as the starting materials. The cristobalite had a whiteness of 85% a specific gravity of 2.27 $g/cm^3$, a hardness of 6.5 Mohs, an average particle size of 270 micron and a bulk density of 1.1 $g/cm^3$.

The mixture was placed in an autoclave with means of stirring with the pressure raised to 12 bar. The temperature was raised to 187 °C. After maintaining the pressure and temperature at these levels for 2.5 hours the pressure was lowered and the surplus cristobalite filtered off. The waterglass obtained was as clear as water and had the following composition: 8.77% by weight of $Na_2O$ and 26.43% $SiO_2$, equivalent to a molar ratio $SiO_2/Na_2O$ of 3.11.

Example II

This example was carried out in a manner similar to example I but with a longer reaction time. The reaction was terminated after 5 hours and the excess cristobalite filtered off. The resultant product contains 8.66% by weight of $Na_2O$ and 26.78% of $SiO_2$, corresponding to a molar ratio of 3.19.

## Example III

The same type of cristobalite was used as in example I, but in this case the reaction was carried out at a higher temperature and pressure. The mixture was heated in an autoclave with stirrer to a temperature of 211 °C at a pressure of 20 bar. After a reaction period of 3.5 hours the excess cristobalite as filtered off and waterglass was obtained with an $Na_2O$ content of 9.42% of weight and an $SiO_2$ content of 29.63% by weight (dry substance content 39.05% by weight), equating to a molar ratio of 3.25.

## Example IV

Tridymite is also usable as a silica source as an alternative to cristobalite.

## Claims

1. Method of preparing aqueous sodium silicate by heating $SiO_2$, NaOH and water under heightened pressure to a temperature above 150 °C, characterised in that in this hydrothermal process cristobalite or tridymite is used as the $SiO_2$ source.

2. Method according to claim 1, in which the reaction is carried out between an aqueous solution of caustic soda and cristobalite or tridymite at a pressure higher than 5 bar.

3. Hydrothermally prepared waterglass consisting of $SiO_2$ and $Na_2O$ in water, characterised in that the molar ratio $SiO_2/Na_2O$ lies above 2.5.

4. Hydrothermally prepared waterglass as in claim 3, characterised in that the molar ratio lies above 3.1.